# EUROPEAN PATENT APPLICATION

(11) **EP 2 281 825 A1**
(43) Date of publication of application: **09.02.2011**
(21) Application number: 09758234.0
(22) Date of filing: 25.05.2009
(51) Int. Cl.: C07F 5/06, C08F 4/64

(54) **ALUMINUM PHENOXIDES AND PROCESS FOR PRODUCTION OF STABILIZED POLYMERS BY USING THE ALUMINUM PHENOXIDES**

(30) Priority: 05.06.2008 JP 2008147678
(71) Applicant: Adeka Corporation, Tokyo 116-8554 (JP)
(72) Inventor: OKAMOTO Kohei, Saitama-shi Saitama 336-0022 (JP); KAWAMOTO Naoshi, Saitama-shi Saitama 336-0022 (JP); AYABE Takashi, Saitama-shi Saitama 336-0022 (JP)
(74) Representative: Forstmeyer, Dietmar
(86) International application number: PCT/JP2009/059533
(87) International publication number: WO 2009/147967

(57) **Abstract**

The invention relates to an aluminum phenoxide compound produced without using aromatic solvent and represented by general formula (I) below. A stabilized polymer can be produced by adding the aluminum phenoxide compound to a catalyst system or a polymerization system before or during polymerization. 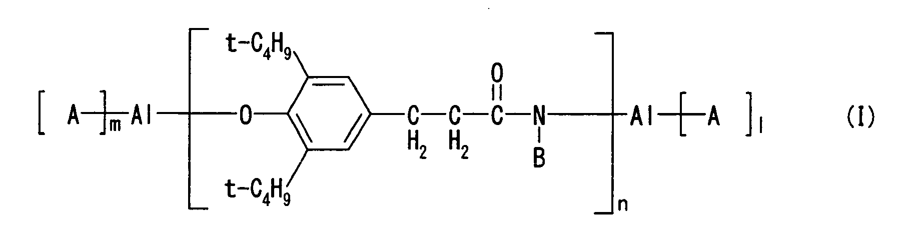 In the formula, A represents an alkyl group having 2 to 6 carbon atoms, a halogen atom, or methylaminoxane; B represents a hexadecyl group, a heptadecyl group, or an octadecyl group; 1, m, and n represent numbers that satisfy expressions m≥1, 1≥1, m+n=3, and 1+n=3; when m or 1 exceeds 1, then A may be different from each other; and when the number of moles of aluminum is expressed as "t", then t/n≥1.3.

## Description

### Technical Field

The present invention relates to a novel aluminum phenoxide compound and process for producing stabilized polymers using the same. The invention also relates to a stabilizer suitable for a process for producing stabilized polymers which reduces the energy consumption amount required for polymer stabilization.

### Background Art

Patent Document 1 proposes a process for producing stabilized polymers by adding, before or during polymerization, a phenolic antioxidant masked with an organoaluminum compound. According to this process, the produced polymer can be stabilized without causing reduction in catalytic activity, and the energy consumption amount required for stabilization can significantly be reduced compared to conventional methods that add stabilizers that need to be heated and kneaded after polymerization.

According to the disclosed stabilization method, however, the phenolic antioxidant is treated with the organoaluminum compound in a toluene solvent. Thus, using this antioxidant as-is for polymerization may have negative effects on the polymerization system or the monomer-recovery system, such as insufficient drying and/or monomer-removal from the obtained polymer, and may also have negative effects on the obtained products, such as degradation in sanitary conditions due to residual solvents.

Patent Document 1: JP-A-2006-52241 (particularly Scope of Claims and Examples)

### Summary of Invention

### Problems to be solved by the Invention

Accordingly, an object of the present invention is to provide a compound that can be added to the polymerization system without having any negative effect on the polymerization system, monomer-recovery system, etc., or any negative effect on the products obtained, and that can also be easily transformed into a phenolic antioxidant after polymerization.

### Means for solving the Problems

Inventors have found that a compound obtained by treating a specific phenolic compound with an excessive amount of an organoaluminum compound can solve the above problem, thus arriving at the present invention.

More specifically, the present invention provides an aluminum phenoxide compound produced without using an aromatic solvent and represented by general formula (I) below:

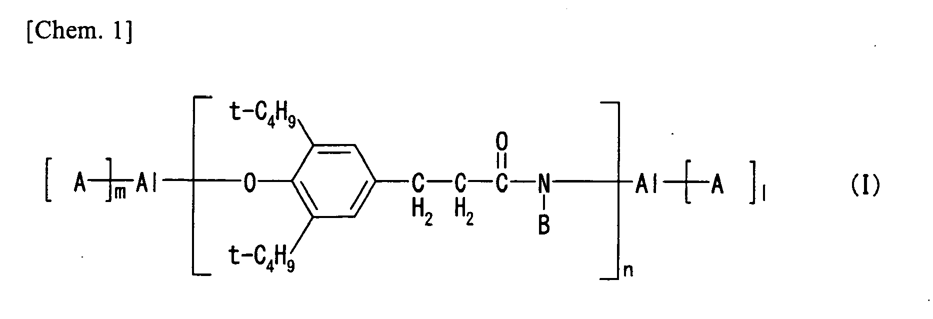

wherein, A represents an alkyl group having 2 to 6 carbon atoms, a halogen atom, or methylaminoxane; B represents a hexadecyl group, a heptadecyl group, or an octadecyl group; 1, m, and n represent numbers that satisfy expressions m≥1, 1≥1, m+n=3, and 1+n=3; when m or 1 exceeds 1, then A may be different from each other; and when the number of moles of aluminum atoms is expressed as "t", then t/n ≥ 1.3.

The present invention also provides a process for producing a stabilized polymer, including: adding the above-mentioned aluminum phenoxide compound to a catalyst system or a polymerization system before or during polymerization.

The present invention also provides a propylene homopolymer or a copolymer of propylene and ethylene and/or an α-olefin produced according to the above-mentioned process for producing a stabilized polymer.

### Advantageous Effects of Invention

The aluminum phenoxide compound of the present invention can be added to the polymerization system as a stabilizer without having any negative effect on the polymerization system or monomer-recovery system or any negative effect on the products obtained, and can also be easily transformed into a phenolic antioxidant after polymerization. The compound can also reduce the energy consumption amount required for polymer stabilization by being added, as a stabilizer, to the catalyst system or the polymerization system before or during polymerization.

### Description of Embodiments

The present invention will be described in detail below according to preferred embodiments thereof.
First, the aluminum phenoxide compound of the invention represented by the above general formula (I) will be described.

In the above general formula (I), A represents an alkyl group having 2 to 6 carbon atoms, a halogen atom, or methylaminoxane. Examples of the alkyl group having 2 to 6 carbon atoms represented by A include methyl, ethyl, propyl, butyl, isobutyl, and hexyl. Among these alkyl groups, methyl, ethyl, and isobutyl are particularly preferred in terms that, for example, they have only a small effect on the polymerization reaction and the phenoxide compound can be produced easily.

Examples of the halogen atom represented by A include chlorine, bromine, and iodine.

In the above general formula (I), B represents a hexadecyl group, a heptadecyl group, or an octadecyl group. Among these groups, the octadecyl group is particularly preferred in terms of, for example, its high compatibility with polymers.

In the above general formula (I), 1, m, and n represent numbers that satisfy the expressions m≥1, 1≥1, m+n=3, and 1+n=3. Note that, if m or 1 exceeds 1, then A may be different from each other.

In the above general formula (I), when the number of moles of aluminum (Al) atoms is expressed as "t", then t/n≥1.3, and more preferably 5.0≥t/n≥1.3.
If t/n<1.3, then the activity of the polymerization catalyst may be decreased and stabilization effects may be insufficient.

A concrete example of the aluminum phenoxide compound represented by the above general formula (I) includes, although not limited to, a compound obtained by reacting the following Compound 1 with an organoaluminum compound.

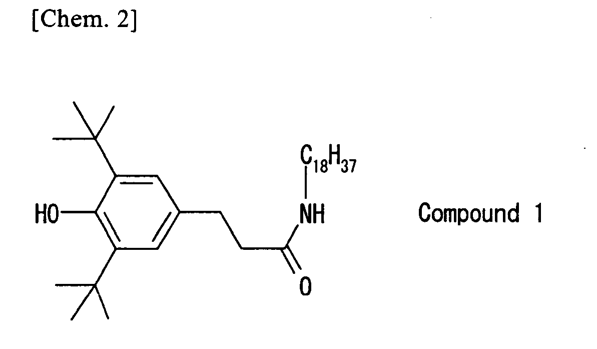

Next, a preferred process for producing the aluminum phenoxide compound of the present invention represented by the above general formula (I) will be described.
For example, in cases of reacting the above Compound 1 with an organoaluminum compound, the aluminum phenoxide compound of the present invention can be produced by mixing the above Compound 1 and an organoaluminum compound, such as trimethylaluminum or diethylchloroaluminum, under inert-gas atmosphere in an aliphatic solvent, such as hexane, heptane, or mineral oil, or without using any solvent, at such a ratio that the number of moles of aluminum atoms becomes 1.3 times or more of the number of moles of Compound 1. Production using hexane and/or heptane as a solvent or without using any solvent is particularly preferred because it is possible to obtain a polymer having a small amount of residual solvent.

The aluminum phenoxide compound of the present invention is produced without using any aromatic solvent, such as benzene, toluene, xylene, or industrial aromatic solvents. Therefore, adding the aluminum phenoxide compound of the present invention as a stabilizer at the time of producing a stabilized polymer will have no negative effect on the polymerization system or the monomer-recovery system, such as insufficient drying and/or monomer-removal from the obtained polymer, nor will it have any negative effect on the obtained products, such as degradation in sanitary conditions due to residual solvents.

The aluminum phenoxide compound of the present invention represented by the above general formula (I) is suitably used as a stabilizer for producing a stabilized polymer, as will be described below.

Next, the process for producing a stabilized polymer of the present invention using the aluminum phenoxide compound of the invention will be described below.

The process for producing a stabilized polymer of the present invention is characterized by adding the aluminum phenoxide compound of the present invention to a catalyst system or a polymerization system before or during polymerization.

In the production process of the present invention, the amount of the present aluminum phenoxide compound to be added may be selected as appropriate, without particular limitation, depending on the stabilized polymer to be produced, and is preferably 0.001 to 5 parts by mass, and more preferably 0.005 to 3 parts by mass, with respect to 100 parts by mass of the stabilized polymer.

The stabilized polymer to be produced according to the production process of the present invention is not particularly limited as long as it is a polymer that can be stabilized by the present aluminum phenoxide compound, and examples thereof include a propylene homopolymer, a copolymer of propylene and ethylene and/or an α-olefin, a polyethylene homopolymer, a copolymer of ethylene and an α-olefin, a polybutene homopolymer, a copolymer of butene and ethylene and/or an α-olefin, poly 4-methyl-1-pentene, a cycloolefin polymer, or syndiotactic polystyrene. Among these stabilized polymers, propylene polymers, such as propylene homopolymer or a copolymer of propylene and ethylene and/or an α-olefin, are preferred in terms that they exhibit, for example, great stabilization effects and excellent compatibility.
Below, detailed description will be made on applying the production process of the present invention to the production of a propylene polymer.

The propylene polymer is obtained through homopolymerization of propylene or copolymerization of propylene and ethylene and/or an α-olefin.
Examples of α-olefins that may be used for copolymerization with propylene include: linear olefins such as 1-butene, 1-pentene, 1-hexene, 1-heptene, 1-octene, 1-hexadecene, and 1-eicosene; and olefins with branched structures, such as 3-methyl-1-butene, 3-methyl-1-pentene, 1-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, allylnaphthalene, allylnorbornane, styrene, dimethylstyrenes, vinylnaphthalenes, allyltoluenes, allylbenzene, vinylcyclohexane, vinylcyclopentane, vinylcycloheptane, and allyltrialkylsilanes. Among these polymers, ethylene and 1-butene are particularly preferred in terms that they exhibit, for example, great stabilization effects and excellent compatibility.

The above-described polymerization may be by single-stage or multi-stage polymerization, may employ pre-polymerization and subsequent polymerization, or may be continuous or batchwise. Examples of methods for polymerizing propylene include slurry polymerization that uses an inert medium, bulk polymerization that employs propylene itself as a fluid solvent, gas-phase polymerization that uses propylene gas, supercritical polymerization that performs polymerization in supercritical propylene, and solution polymerization. One or more of these polymerization methods may be employed in combination.

In case of slurry polymerization of propylene, examples of inert hydrocarbon media usable as solvents include: aliphatic hydrocarbons such as propane, butane, pentane, hexane, heptane, octane, decane, dodecane, and kerosene; alicyclic hydrocarbons such as cyclopentane, cyclohexane, and methylcyclopentane; and mixtures thereof. Among these media, aliphatic hydrocarbons are preferred, and hexane and heptane are even more preferred, in terms that, for example, the residual amount thereof in polymers can easily be reduced.

Polymerization of propylene is conducted at temperatures ranging generally from 0 to 100°C, and preferably from 45 to 85°C, and under pressures ranging generally from normal atmospheric pressure to 9.8 MPa, preferably from 1.0 to 4.0 MPa, and more preferably from 1.2 to 4.0 MPa.

Examples of catalysts usable for propylene polymerization include transition metal catalysts using compounds containing transition metals in groups 3 to 11 of the periodic table (such as Ti, Zr, Hf, V, Fe, Ni, Pd, Pt, Y, and Sm). Typical examples include Ziegler-Natta catalysts, Ziegler catalysts, metallocene catalysts, chromium-based catalysts, constrained geometry catalysts, and phenoxyimine catalysts. These catalysts may be used singly, or several types may be used in combination.

In propylene polymerization, the amount of catalyst to be added may be selected as appropriate, without particular limitation, depending on the type of catalyst etc., and is preferably 0.0001 to 1 parts by mass, and more preferably 0.0005 to 0.1 parts by mass, with respect to 100 parts by mass of the polymer.

As for the Ziegler-Natta catalyst, known Ziegler-Natta catalysts may be used without particular limitation. Examples of titanium compounds include: titanium trichloride obtained by reduction with an organoaluminum compound etc., and compounds obtained by treating a titanium trichloride composition with an electron-donating compound for further activation (see, e.g., JP-A-47-34478, US 4,460,757A, or EP 0261727B1; generally referred to as "reduction catalyst"); and compounds wherein titanium tetrachloride is supported on a support such as magnesium chloride (see, e.g., JP-A-58-157808, US 4,952,649A, JP-A-58-5310, or JP-A-61-218606; generally referred to as "supported catalyst").

The Ziegler-Natta catalyst may be used in combination with a promoter such as an organoaluminum compound. Examples of the organoaluminum compound usable as a promoter include: trialkylaluminums such as triethylaluminum and tributylaluminum; and partially-halogenated alkylaluminums, such as dialkylaluminum halides e.g. diethylaluminum chloride, dibutylaluminum chloride, and diethylaluminum bromide, alkylaluminum sesquihalides e.g. ethylaluminum sesquichloride, butylaluminum sesquichloride, and ethylaluminum sesquibromide, and alkylaluminum dihalides e.g. ethylaluminum dichloride, propylaluminum dichloride, and butylaluminum dibromide.

Among the above-described organoaluminum compounds, a preferably-usable reduction catalyst is diethylaluminum chloride, and a preferably-usable supported catalyst is trialkylaluminum.

As for the Ziegler catalyst, known Ziegler catalysts may be used without particular limitation. Examples thereof include binary catalysts composed of a transition metal compound from groups IV to VIII of the periodic table and an organometallic compound from groups I to III. A typical example may include a catalyst composed of trialkylaluminum and titanium chloride. The catalyst may be used with/without a third component and/or a support.

An example of the metallocene catalyst may be composed of the following transition metal compound (i) and the following transition metal compound (ii):
(i): A transition metal compound that contains two groups each having a cyclopentadiene-type anion skeleton, wherein the groups having the cyclopentadiene-type anion skeleton are bonded together directly or via a bridging group and the central metal is hafnium.
(ii): A transition metal compound that contains two groups each having a cyclopentadiene-type anion skeleton with one or more substituents, wherein the groups having the cyclopentadiene-type anion skeleton are not bonded together and the central metal is zirconium.
The metallocene catalyst will be described in detail below.

Examples of the group having a cyclopentadiene-type anion skeleton (also abbreviated hereinafter as "Cp group") in the transition metal compound (i) or (ii) include η5-(substituted)-cyclopentadienyl, η5-(substituted)-indenyl, and η5-(substituted)-fluorenyl. Concrete examples include η5-cyclopentadienyl, η5-methylcyclopentadienyl, η5-ethylcyclopentadienyl, η5-propylcyclopentadienyl, η5-butylcyclopentadienyl, η5-hexylcyclopentadienyl, η5-octylcyclopentadienyl, η5-dimethylcyclopentadienyl, η5-butylmethylcyclopentadienyl, η5-methylpropylcylopentadienyl, η5-diethylcyclopentadienyl, η5-trimethylcyclopentadienyl, η5-tetramethylcyclopentadienyl, η5-pentamethylcyclopentadienyl, η5-indenyl, η5-4,5,6,7-tetrahydroindenyl, η5-methylindenyl, η5-butylindenyl, η5-dimethylindenyl, η5-trimethylindenyl, η5-methylpropylindenyl, η5-4,5-benzindenyl, η5-methyl-4,5-benzindenyl, η5-phenylindenyl, η5-methylphenylindenyl, η5-methylnaphthylindenyl, η5-fluorenyl, η5-dimethylfluorenyl, η5-dibutylfluorenyl, and substitution products of the above. Note that in the present Description, the expression "η5-" may be omitted from the names of transition metal compounds.

In the examples above, there are various combinations of di-substitution products and tri-substitution products of the η5-cyclopentadienyl group depending on the positions of the substituents; all such combinations are encompassed herein. The same applies to the substitution products of the η5-indenyl group and the η5-fluorenyl group, and all combinations thereof are encompassed herein. Further, alkyl groups, such as propyl and butyl, include isomers such as n-, i-, sec-, and tert-.

The group having a cyclopentadiene-type anion skeleton in the transition metal compound (ii) has one or more substituents. Examples of the group having a cyclopentadiene-type anion skeleton with one or more substituents include η5-substituted-cyclopentadienyl, η5-(substituted)-indenyl, and η5-(substituted)-fluorenyl. Concrete examples include the examples given for the above-described groups having the cyclopentadiene-type anion skeleton, except for η5-cyclopentadienyl.

Each transition metal compound (i) or (ii) contains two Cp groups. In the transition metal compound (i), the two Cp groups are bonded together directly or via a bridging group, whereas in the transition metal compound (ii), the two Cp groups are not bonded together. It is preferable that the two Cp groups in the transition metal compound (i) are bonded together via a bridging group. Various bridging groups are known that bridge two Cp groups, and preferred among them are residues containing a carbon atom, a silicon atom, a nitrogen atom, an oxygen atom, a sulfur atom, or a phosphorus atom. Preferably, the residue is a divalent residue in which the atom bonded to (each of) the two Cp groups is a carbon atom, a silicon atom, a nitrogen atom, an oxygen atom, a sulfur atom, or a phosphorus atom, and more preferably, the residue is a divalent residue wherein the atom bonded to (each of) the two Cp groups is a carbon atom, a silicon atom, a nitrogen atom, an oxygen atom, a sulfur atom, or a phosphorus atom and wherein the minimum number of atoms between the atoms bonded to the respective two Cp groups is 3 or less (this includes cases where a single atom is bonded to the two Cp groups). Concrete examples of the residue include: alkylene groups such as ethylene and propylene; substituted alkylene groups such as dimethylmethylene or diphenylmethylene; a silylene group; substituted silylene groups such as dimethylsilylene, diphenylsilylene, or tetramethyldisilylene; and hetero atoms such as a nitrogen atom, an oxygen atom, a sulfur atom, or a phosphorus atom. Particularly preferable groups include methylene, ethylene, dimethylmethylene (isopropylidene), dimethylsilylene, diethylsilylene, and diphenylsilylene.

A preferable example of the above-mentioned transition metal compound (i) is represented by the following general formula [1]:

(L2)₂Hf(X1)₂ [1]

wherein, L2 is a group having a cyclopentadiene-type anion skeleton; the two L2 groups may be the same or may be different from each other; the two L2 groups are connected directly or via a residue containing a carbon atom, a silicon atom, a nitrogen atom, an oxygen atom, a sulfur atom, or a phosphorus atom; and X1 represents a halogen atom, a hydrocarbon group, or a hydrocarbon-oxy group.

The group having a cyclopentadiene-type anion skeleton represented by L2 is as already described above, and among the above, η5-indenyl and η5-alkyl-substituted indenyl groups are preferred.
The two L2 groups in the general formula [1] are connected directly or via a residue containing a carbon atom, a silicon atom, a nitrogen atom, an oxygen atom, a sulfur atom, or a phosphorus atom. The residue is as already described above, and preferred transition metal compounds represented by the general formula [1] are transition metal compounds in which the two L2 groups are connected via a residue containing a carbon atom, a silicon atom, a nitrogen atom, an oxygen atom, a sulfur atom, or a phosphorus atom.

X1 in the general formula [1] represents a halogen atom, a hydrocarbon group, or a hydrocarbon-oxy group. Concrete examples of the halogen atom include fluorine, chlorine, bromine, and iodine. The "hydrocarbon group" as used in this formula does not include groups having a cyclopentadiene-type anion skeleton. Examples of the hydrocarbon group in this formula include, for example, an alkyl group, an aralkyl group, and an aryl groups. Preferred among these hydrocarbon groups are an alkyl group having 1 to 20 carbon atoms, an aralkyl group having 7 to 20 carbon atoms, or an aryl group having 6 to 20 carbon atoms.

Examples of the alkyl group having 1 to 20 carbon atoms include methyl, ethyl, n-propyl, isopropyl, n-butyl, sec-butyl, tert-butyl, isobutyl, n-pentyl, neopentyl, amyl, n-hexyl, n-octyl, n-decyl, n-dodecyl, n-pentadecyl, and n-eicosyl. Preferred among these alkyl groups are methyl, ethyl, isopropyl, tert-butyl, isobutyl, and amyl.
The above alkyl group may be substituted by one or more halogen atoms such as fluorine, chlorine, bromine, or iodine. Examples of alkyl groups having 1 to 10 carbon atoms substituted by one or more halogen atoms include fluoromethyl, trifluoromethyl, chloromethyl, trichloromethyl, fluoroethyl, pentafluoroethyl, perfluoropropyl, perfluorobutyl, perfluorohexyl, perfluorooctyl, perchloropropyl, perchlorobutyl, and perbromopropyl. Further, the above alkyl group may partially be substituted by, for example, an alkoxy group such as methoxy or ethoxy, an aryloxy group such as phenoxy, or an aralkyloxy group such as benzyloxy.

Examples of the aralkyl group having 7 to 20 carbon atoms include benzyl, (2-methylphenyl)methyl, (3-methylphenyl)methyl, (4-methylphenyl)methyl, (2,3-dimethylphenyl)methyl, (2,4-dimethylphenyl)methyl, (2,5-dimethylphenyl)methyl, (2,6-dimethylphenyl)methyl, (3,4-dimethylphenyl)methyl, (3,5-dimethylphenyl)methyl, (2,3,4-trimethylphenyl)methyl, (2,3,5-trimethylphenyl)methyl, (2,3,6-trimethylphenyl)methyl, (3,4,5-trimethylphenyl)methyl, (2,4,6-trimethylphenyl)methyl, (2,3,4,5-tetramethylphenyl)methyl, (2,3,4,6-tetramethylphenyl)methyl, (2,3,5,6-tetramethylphenyl)methyl, (pentamethylphenyl)methyl, (ethylphenyl)methyl, (n-propylphenyl)methyl, (isopropylphenyl)methyl, (n-butylphenyl)methyl, (sec-butylphenyl)methyl, (tert-butylphenyl)methyl, (n-pentylphenyl)methyl, (neopentylphenyl)methyl, (n-hexylphenyl)methyl, (n-octylphenyl)methyl, (n-decylphenyl)methyl, (n-dodecylphenyl)methyl, naphthylmethyl, and anthracenylmethyl. Preferred among these aralkyl groups is benzyl.
The aralkyl group may partially be substituted by, for example, a halogen atom such as fluorine, chlorine, bromine, or iodine, an alkoxy group such as methoxy or ethoxy, an aryloxy group such as phenoxy, or an aralkyloxy group such as benzyloxy.

Examples of the aryl group having 6 to 20 carbon atoms include phenyl, 2-tolyl, 3-tolyl, 4-tolyl, 2,3-xylyl, 2,4-xylyl, 2,5-xylyl, 2,6-xylyl, 3,4-xylyl, 3,5-xylyl, 2,3,4-trimethylphenyl, 2,3,5-trimethylphenyl, 2,3,6-trimethylphenyl, 2,4,6-trimethylphenyl, 3,4,5-trimethylphenyl, 2,3,4,5-tetramethylphenyl, 2,3,4,6-tetramethylphenyl, 2,3,5,6-tetramethylphenyl, pentamethylphenyl, ethylphenyl, n-propylphenyl, isopropylphenyl, n-butylphenyl, sec-butylphenyl, tert-butylphenyl, n-pentylphenyl, neopentylphenyl, n-hexylphenyl, n-octylphenyl, n-decylphenyl, n-dodecylphenyl, n-tetradecylphenyl, naphthyl, and anthracenyl. Preferred among these aryl groups is phenyl. The aryl group may partially be substituted by, for example, a halogen atom such as fluorine, chlorine, bromine, or iodine, an alkoxy group such as methoxy or ethoxy, an aryloxy group such as phenoxy, or an aralkyloxy group such as benzyloxy.

Examples of the "hydrocarbon-oxy group" as used in this formula include alkoxy groups, aralkyloxy groups, and aryloxy groups. Preferred among these are an alkoxy group having 1 to 20 carbon atoms, an aralkyloxy group having 7 to 20 carbon atoms, or an aryloxy group having 6 to 20 carbon atoms.

Examples of the alkoxy group having 1 to 20 carbon atoms include methoxy, ethoxy, n-propoxy, isopropoxy, n-butoxy, sec-butoxy, tert-butoxy, n-pentoxy, neopentoxy, n-hexoxy, n-octoxy, n-dodecoxy, n-pentadecoxy, and n-eicosoxy. Preferred among these are methoxy, ethoxy, isopropoxy, and tert-butoxy. The alkoxy group may partially be substituted by, for example, a halogen atom such as fluorine, chlorine, bromine, or iodine, an alkoxy group such as methoxy or ethoxy, an aryloxy group such as phenoxy, or an aralkyloxy group such as benzyloxy.

Examples of the aralkyloxy group having 7 to 20 carbon atoms include benzyloxy, (2-methylphenyl)methoxy, (3-methylphenyl)methoxy, (4-methylphenyl)methoxy, (2,3-dimethylphenyl)methoxy, (2,4-dimethylphenyl)methoxy, (2,5-dimethylphenyl)methoxy, (2,6-dimethylphenyl)methoxy, (3,4-dimethylphenyl)methoxy, (3,5-dimethylphenyl)methoxy, (2,3,4-trimethylphenyl)methoxy, (2,3,5-trimethylphenyl)methoxy, (2,3,6-trimethylphenyl)methoxy, (2,4,5-trimethylphenyl)methoxy, (2,4,6-trimethylphenyl)methoxy, (3,4,5-trimethylphenyl)methoxy, (2,3,4,5-tetramethylphenyl)methoxy, (2,3,4,6-tetramethylphenyl)methoxy, (2,3,5,6-tetramethylphenyl)methoxy, (pentamethylphenyl)methoxy, (ethylphenyl)methoxy, (n-propylphenyl)methoxy, (isopropylphenyl)methoxy, (n-butylphenyl)methoxy, (sec-butylphenyl)methoxy, (tert-butylphenyl)methoxy, (n-hexylphenyl)methoxy, (n-octylphenyl)methoxy, (n-decylphenyl)methoxy, naphthylmethoxy, and anthracenylmethoxy. Preferred among these is benzyloxy. The aralkyloxy group may partially be substituted by, for example, a halogen atom such as fluorine, chlorine, bromine, or iodine, an alkoxy group such as methoxy or ethoxy, an aryloxy group such as phenoxy, or an aralkyloxy group such as benzyloxy.

Examples of the aryloxy group having 6 to 20 carbon atoms include phenoxy, 2-methylphenoxy, 3-methylphenoxy, 4-methylphenoxy, 2, 3-dimethylphenoxy, 2,4-dimethylphenoxy, 2,5-dimethylphenoxy, 2,6-dimethylphenoxy, 3,4-dimethylphenoxy, 3,5-dimethylphenoxy, 2-tert-butyl-3-methylphenoxy, 2-tert-butyl-4-methylphenoxy, 2-tert-butyl-5-methylphenoxy, 2-tert-butyl-6-methylphenoxy, 2,3,4-trimethylphenoxy, 2,3,5-trimethylphenoxy, 2,3,6-trimethylphenoxy, 2,4,5-trimethylphenoxy, 2,4,6-trimethylphenoxy, 2-tert-butyl-3,4-dimethylphenoxy, 2-tert-butyl-3,5-dimethylphenoxy, 2-tert-butyl-3,6-dimethylphenoxy, 2,6-di-tert-butyl-3-methylphenoxy, 2-tert-butyl-4,5-dimethylphenoxy, 2,6-di-tert-butyl-4-methylphenoxy, 3,4,5-trimethylphenoxy, 2,3,4,5-tetramethylphenoxy, 2-tert-butyl-3,4,5-trimethylphenoxy, 2,3,4,6-tetramethylphenoxy, 2-tert-butyl-3,4,6-trimethylphenoxy, 2,6-di-tert-butyl-3,4-dimethylphenoxy, 2,3,5,6-tetramethylphenoxy, 2-tert-butyl-3,5,6-trimethylphenoxy, 2,6-di-tert-butyl-3,5-dimethylphenoxy, pentamethylphenoxy, ethylphenoxy, n-propylphenoxy, isopropylphenoxy, n-butylphenoxy, sec-butylphenoxy, tert-butylphenoxy, n-hexylphenoxy, n-octylphenoxy, n-decylphenoxy, n-tetradecylphenoxy, naphthoxy, and anthracenoxy. The aryloxy group may partially be substituted by, for example, a halogen atom such as fluorine, chlorine, bromine, or iodine, an alkoxy group such as methoxy or ethoxy, an aryloxy group such as phenoxy, or an aralkyloxy group such as benzyloxy.

Even more preferred examples of X include the chlorine atom and groups such as methyl, ethyl, n-propyl, isopropyl, n-butyl, methoxy, ethoxy, n-propoxy, isopropoxy, n-butoxy, trifluoromethoxy, phenyl, phenoxy, 2,6-di-tert-butylphenoxy, 3,4,5-trifluorophenoxy, pentafluorophenoxy, 2,3,5,6-tetrafluoro-4-pentafluorophenylphenoxy, or benzyl.

Concrete examples of the transition metal compounds represented by the general formula [1] include ethylenebis(cyclopentadienyl)hafnium dichloride, ethylenebis(methylcyclopentadienyl)hafnium dichloride, ethylenebis(ethylcyclopentadienyl)hafnium dichloride, ethylenebis(propylcyclopentadienyl)hafnium dichloride, ethylenebis(butylcyclopentadienyl)hafnium dichloride, ethylenebis(hexylcyclopentadienyl)hafnium dichloride, ethylenebis(octylcyclopentadienyl)hafnium dichloride, ethylenebis(dimethylcyclopentadienyl)hafnium dichloride, ethylenebis(diethylcyclopentadienyl)hafnium dichloride, ethylenebis(ethylmethylcyclopentadienyl)hafnium dichloride, ethylenebis(butylmethylcyclopentadienyl)hafnium dichloride, ethylenebis(trimethylcyclopentadienyl)hafnium dichloride, ethylenebis(tetramethylcyclopentadienyl)hafnium dichloride, ethylenebis(indenyl)hafnium dichloride, ethylenebis(methylindenyl)hafnium dichloride, ethylenebis(4,5,6,7-tetrahydroindenyl)hafnium dichloride, ethylenebis(phenylindenyl)hafnium dichloride, and ethylenebis(fluorenyl)hafnium dichloride.

Other examples include ethylene(cyclopentadienyl)(tetramethylcyclopentadienyl)hafnium dichloride, ethylene(cyclopentadienyl)(indenyl)hafnium dichloride, ethylene(methylcyclopentadienyl)(indenyl)hafnium dichloride, ethylene(ethylcyclopentadienyl)(indenyl)hafnium dichloride, ethylene(propylcyclopentadienyl)(indenyl)hafnium dichloride, ethylene(butylcyclopentadienyl)(indenyl)hafnium dichloride, ethylene(hexylcyclopentadienyl)(indenyl)hafnium dichloride, ethylene(octylcyclopentadienyl)(indenyl)hafnium dichloride, ethylene(tetramethylcyclopentadienyl)(indenyl)hafnium dichloride, ethylene(cyclopentadienyl)(fluorenyl)hafnium dichloride, ethylene(methylcyclopentadienyl)(fluorenyl)hafnium dichloride, ethylene(tetramethylcyclopentadienyl)(fluorenyl)hafnium dichloride, ethylene(ethylcyclopentadienyl)(fluorenyl)hafnium dichloride, ethylene(propylcyclopentadienyl)(fluorenyl)hafnium dichloride, ethylene(butylcyclopentadienyl)(fluorenyl)hafnium dichloride, ethylene(hexylcyclopentadienyl)(fluorenyl)hafnium dichloride, ethylene(octylcyclopentadienyl)(fluorenyl)hafnium dichloride, and ethylene(indenyl)(fluorenyl)hafnium dichloride.

Further, other examples may include compounds in which "ethylene" in the above-described compounds is changed to isopropylidene, dimethylsilylene, diethylsilylene, diphenylsilylene, or dimethoxysilylene, or compounds in which "dichloride" is changed to difluoride, dibromide, diiodide, dimethyl, diethyl, diisopropyl, dimethoxide, diethoxide, dipropoxide, dibutoxide, bis(trifluoromethoxide), diphenyl, diphenoxide, bis(2,6-di-tert-butylphenoxide), bis(3,4,5-trifluorophenoxide), bis(pentafluorophenoxide), bis(2,3,5,6-tetrafluoro-4-pentafluorophenylphenoxide), or dibenzyl.

In the above examples, mono-substitution products of the η5-cyclopentadienyl group include substitution products at the 2-position and 3-position; di-substitution products thereof include substitution products at the 2,3-positions, 2,4-positions, 2,5-positions, and 3,5-positions; and tri-substitution products thereof include substitution products at the 2,3,4-positions and 2,3,5-positions. The same applies to substitution products of the η5-indenyl group; when the bridging group is at the 1-position, then mono-substitution products include substitution products at the 2-position, 3-position, 4-position, 5-position, 6-position, and 7-position; when the bridging position is other than the 1-position, all conceivable combinations are encompassed herein. The same applies to substitution products having two or more substituents, and all conceivable combinations of substituents and bridging positions are encompassed herein. The same applies to substitution products of the η5-fluorenyl group, and all conceivable combinations of substituents and bridging positions are encompassed herein. Further, alkyl groups such as propyl and butyl include isomers, such as n-, i-, sec-, and tert-. Furthermore, unless otherwise stated, alkoxy groups such as propoxy and butoxy include isomers, such as n-, i-, sec-, and tert-. Moreover, two or more types of the above-described complexes may be used.

A preferable example of the above-mentioned transition metal compound (ii) is represented by the following general formula [2]:

(L3)₂(M2)(X2)₂ [2]

wherein, M2 is a titanium atom or a zirconium atom; L3 is a group having a cyclopentadiene-type anion skeleton with one or more substituents; the two L3 groups are not bridged; and X2 represents a halogen atom, a hydrocarbon group, or a hydrocarbon-oxy group.

The group having a cyclopentadiene-type anion skeleton with one or more substituents represented by L3 is as already described above; preferred among the above are η5-alkyl-substituted cyclopentadienyl groups. The two L3 groups in the general formula [2] are not bridged.

X2 in the general formula [2] is a halogen atom, a hydrocarbon group, or a hydrocarbon-oxy group, and is the same as X1 in the general formula [1].

Concrete examples of the transition metal compounds represented by the general formula [2] include bis(methylcyclopentadienyl)titanium dichloride, bis(ethylcyclopentadienyl)titanium dichloride, bis(propylcyclopentadienyl)titanium dichloride, bis(butylcyclopentadienyl)titanium dichloride, bis(hexylcyclopentadienyl)titanium dichloride, bis(octylcyclopentadienyl)titanium dichloride, bis(dimethylcyclopentadienyl)titanium dichloride, bis(diethylcyclopentadienyl)titanium dichloride, bis(ethylmethylcyclopentadienyl)titanium dichloride, bis(methylbutylcyclopentadienyl)titanium dichloride, bis(trimethylcyclopentadienyl)titanium dichloride, bis(tetramethylcyclopentadienyl)titanium dichloride, bis(pentamethylcyclopentadienyl)titanium dichloride, bis(indenyl)titanium dichloride, bis(methylindenyl)titanium dichloride, bis(phenylindenyl)titanium dichloride, and bis(methylfluorenyl)titanium dichloride.

Other examples include (methylcyclopentadienyl)(indenyl)titanium dichloride, (ethylcyclopentadienyl)(indenyl)titanium dichloride, (propylcyclopentadienyl)(indenyl)titanium dichloride, (butylcyclopentadienyl)(indenyl)titanium dichloride, (hexylcyclopentadienyl)(indenyl)titanium dichloride, (octylcyclopentadienyl)(indenyl)titanium dichloride, (tetramethylcyclopentadienyl)(indenyl)titanium dichloride, (methylcyclopentadienyl)(fluorenyl)titanium dichloride, (tetramethylcyclopentadienyl)(fluorenyl)titanium dichloride, (ethylcyclopentadienyl)(fluorenyl)titanium dichloride, (propylcyclopentadienyl)(fluorenyl)titanium dichloride, (butylcyclopentadienyl)(fluorenyl)titanium dichloride, (hexylcyclopentadienyl)(fluorenyl)titanium dichloride, (octylcyclopentadienyl)(fluorenyl)titanium dichloride, (pentamethylcyclopentadienyl)(fluorenyl)titanium dichloride, and (indenyl)(fluorenyl)titanium dichloride.

Further, other examples may include compounds in which "titanium" in the above-described compounds is changed to zirconium, or compounds in which "dichloride" is changed to difluoride, dibromide, diiodide, dimethyl, diethyl, diisopropyl, dimethoxide, diethoxide, dipropoxide, dibutoxide, bis(trifluoromethoxide), diphenyl, diphenoxide, bis(2,6-di-tert-butylphenoxide), bis(3,4,5-trifluorophenoxide), bis(pentafluorophenoxide), bis(2,3,5,6-tetrafluoro-4-pentafluorophenylphenoxide), or dibenzyl.

In the above examples, di-substitution products of the η5-cyclopentadienyl group include substitution products at the 1,2-positions and 1,3-positions; and tri-substitution products thereof include substitution products at the 1,2,3-positions and 1,2,4-positions. The same applies to substitution products of the η5-indenyl group; mono-substitution products include substitution products at the 1-position, 2-position, 4-position, and 5-position, and enantiomers thereof; and all conceivable combinations are encompassed for substitution products having two or more substituents. The same applies to substitution products of the η5-fluorenyl group, and all conceivable combinations are encompassed herein. Further, alkyl groups, such as propyl and butyl, include isomers such as n-, i-, sec-, and tert-. Furthermore, unless otherwise stated, alkoxy groups, such as propoxy and butoxy, include isomers such as n-, i-, sec-, and tert-. Moreover, two or more types of the above-described complexes may be used.

The metallocene catalyst (also referred to hereinafter as "component (A)") composed of the above-described transition metal compound (i) and the transition metal compound (ii) may be used in combination with an activating promoter. Any kind of activating promoter may be used without particular limitation as long as it can activate the metallocene catalyst composed of the above transition metal compounds; preferable examples are component (B) and/or component (C) described below. In other words, the metallocene catalyst used in the present invention is preferably a metallocene catalyst obtained by contacting the metallocene catalyst (A) composed of the above-described transition metal compounds with the following component (B) and/or component (C).

Component (B):
At least one type of aluminum compound selected from (B1) to (B3) below:
   (B1): An organoaluminum compound represented by the following general formula:

      (E1)ₐAlZ₃₋ₐ
   (B2): A cyclic aluminoxane having a structure represented by the following general formula:

      {-A1(E2)-O-}_{b}
   (B3): A linear aluminoxane having a structure represented by the following general formula:

      (E3) {-A1(E3)-O-}_{c}A1(E3)₂
   In the above formulae: E1, E2, and E3 each represent a hydrocarbon group; all the E1, all the E2, and all the E3 may be the same or may be different from each other; Z represents a hydrogen atom or a halogen atom; all the Z may be the same or may be different from each other; "a" represents a number satisfying 0<a≤3; "b" represents an integer of 2 or more; and "c" represents an integer of 1 or more.
Component (C):
At least one type of boron compound selected from (C1) to (C3) below:
   (C1): A boron compound represented by the following general formula:

      BQ1Q2Q3
   (C2): A boron compound represented by the following general formula:

      G⁺(BQ1Q2Q3Q4)⁻
   (C3): A boron compound represented by the following general formula:

      (L-H)⁺(BQ1Q2Q3Q4)⁻
In the above formulae: B is a boron atom in a trivalent state; Q1 to Q4 each represent a halogen atom, a hydrocarbon group, a halogenated hydrocarbon group, a substituted silyl group, an alkoxy group, or a di-substituted amino group; Q1 to Q4 may be the same or may be different from each other; G⁺ is an inorganic or organic cation; L is a neutral Lewis base; and (L-H)⁺ is a Broensted acid.
Component (B) and component (C) will be described in further detail below.

The aluminum compound of component (B) is at least one type of aluminum compound selected from (B1) to (B3) below.
At least one type of aluminum compound selected from (B1) to (B3) below:
(B1): An organoaluminum compound represented by the following general formula:

   (E1)ₐAlZ₃₋ₐ
(B2): A cyclic aluminoxane having a structure represented by the following general formula:

   {-Al(E2)-O-} _{b}
(B3): A linear aluminoxane having a structure represented by the following general formula:

   (E3) {-Al(E3)-O-}_{c}Al(E3)₂
In the above formulae: E1, E2, and E3 each represent a hydrocarbon group; all the E1, all the E2, and all the E3 may be the same or may be different from each other; Z represents a hydrogen atom or a halogen atom; all the Z may be the same or may be different from each other; "a" represents a number satisfying 0<a≤3; "b" represents an integer of 2 or more; and "c" represents an integer of 1 or more.)
As for the hydrocarbon group represented by E1, E2, or E3, a hydrocarbon group having 1 to 8 carbon atoms are preferred, and an alkyl group are further preferred.

Concrete examples of the organoaluminum compound (B1) include: trialkylaluminums such as trimethylaluminum, triethylaluminum, tripropylaluminum, triisobutylaluminum, trihexylaluminum, and trioctylaluminum; dialkylaluminum chlorides such as dimethylaluminum chloride, diethylaluminum chloride, dipropylaluminum chloride, diisobutylaluminum chloride, and dihexylaluminum chloride; alkylaluminum dichlorides such as methylaluminum dichloride, ethylaluminum dichloride, propylaluminum dichloride, isobutylaluminum dichloride, and hexylaluminum dichloride; and dialkylaluminum hydrides such as dimethylaluminum hydride, diethylaluminum hydride, dipropylaluminum hydride, diisobutylaluminum hydride, and dihexylaluminum hydride. Among these, trialkylaluminums are preferred; trimethylaluminum, triethylaluminum, tri-n-butylaluminum, triisobutylaluminum, tri-n-hexylaluminum, and tri-n-octylaluminum are further preferred; and triisobutylaluminum and tri-n-octylaluminum are particularly preferred.

Concrete examples of E2 and E3 in the cyclic aluminoxane (B2) and the linear aluminoxane (B3) include alkyl groups such as methyl, ethyl, n-propyl, isopropyl, n-butyl, isobutyl, n-pentyl, and neopentyl. Further, b is an integer of 2 or more, and c is an integer of 1 or more. Preferably, E2 and E3 each represent methyl or isobutyl, b is 2 to 40, and c is 1 to 40.

The above-described aluminoxane can be prepared according to various methods. Known methods can be employed without particular limitation. For example, an aluminoxane can be prepared by bringing a solution prepared by dissolving a trialkylaluminum (e.g., trimethylaluminum) in an appropriate organic solvent (e.g., benzene, toluene, or an aliphatic hydrocarbon) into contact with water. Another example may be to bring a trialkylaluminum (e.g., trimethylaluminum) into contact with a metal salt containing water of crystallization (e.g., copper sulfate hydrate). Aluminoxanes prepared in this way are considered as existing generally as a mixture of cyclic and linear aluminoxanes.

The boron compound of component (C) is at least one type of boron compound selected from (C1) to (C3) below.
(C1): A boron compound represented by the following general formula:

   BQ1Q2Q3
(C2): A boron compound represented by the following general formula:

   G⁺(BQ1Q2Q3Q4)⁻
(C3): A boron compound represented by the following general formula:

   (L-H)⁺(BQ1Q2Q3Q4)⁻
In the above formulae: B is a boron atom in a trivalent state; Q1 to Q4 each represent a halogen atom, a hydrocarbon group, a halogenated hydrocarbon group, a substituted silyl group, an alkoxy group, or a di-substituted amino group; Q1 to Q4 may be the same or may be different from each other; G⁺ is an inorganic or organic cation; L is a neutral Lewis base; and (L-H)⁺ is a Broensted acid.

In the boron compound (C1), B is a boron atom in a trivalent state, and Q1 to Q4 each represent a halogen atom, a hydrocarbon group, a halogenated hydrocarbon group, a substituted silyl group, an alkoxy group, or a di-substituted amino group, which may be the same or may be different from each other. Preferably, Q1 to Q4 each represent a halogen atom, a hydrocarbon group having 1 to 20 carbon atoms, a halogenated hydrocarbon group having 1 to 20 carbon atoms, a substituted silyl group having 1 to 20 carbon atoms, an alkoxy group having 1 to 20 carbon atoms, or an amino group having 2 to 20 carbon atoms. More preferably, Q1 to Q4 each represent a halogen atom, a hydrocarbon group having 1 to 20 carbon atoms, or a halogenated hydrocarbon group having 1 to 20 carbon atoms. Even more preferably, Q1 to Q4 each represent a fluorinated hydrocarbon group having 1 to 20 carbon atoms containing at least one fluorine atom, and particularly preferably, Q1 to Q4 each represent a fluorinated aryl group having 6 to 20 carbon atoms containing at least one fluorine atom.

Concrete examples of the boron compound (C1) include tris(pentafluorophenyl)borane, tris(2,3,5,6-tetrafluorophenyl)borane, tris(2,3,4,5-tetrafluorophenyl)borane, tris(3,4,5-trifluorophenyl)borane, tris(2,3,4-trifluorophenyl)borane, and phenylbis(pentafluorophenyl)borane; most preferred among these is tris(pentafluorophenyl)borane.

In the boron compound (C2), G⁺ is an inorganic or organic cation, B is a boron atom in a trivalent state, and Q1 to Q4 are the same as Q1 to Q4 in (C1) above.

Concrete examples of inorganic G⁺ cations in the boron compound (C2) include ferrocenium cations, alkyl-substituted ferrocenium cations, and silver cations; examples of organic G⁺ cations include triphenylmethyl cations. Preferred as G⁺ are carbenium cations; particularly preferred are triphenylmethyl cations. Examples of (BQ1Q2Q3Q4)⁻ include tetrakis(pentafluorophenyl)borate, tetrakis(2,3,5,6-tetrafluorophenyl)borate, tetrakis(2,3,4,5-tetrafluorophenyl)borate, tetrakis(3,4,5-trifluorophenyl)borate, tetrakis(2,3,4-trifluorophenyl)borate, phenyltris(pentafluorophenyl)borate, and tetrakis(3,5-bistrifluoromethylphenyl)borate.

Concrete examples of combinations of the above include ferrocenium tetrakis(pentafluorophenyl)borate, 1,1'-dimethylferrocenium tetrakis(pentafluorophenyl)borate, silver tetrakis(pentafluorophenyl)borate, triphenylmethyl tetrakis(pentafluorophenyl)borate, and triphenylmethyl tetrakis(3,5-bistrifluoromethylphenyl)borate; most preferred among these is triphenylmethyl tetrakis(pentafluorophenyl)borate.

In the boron compound (C3), L is a neutral Lewis base, (L-H)⁺ is a Broensted acid, B is a boron atom in a trivalent state, and Q1 to Q4 are the same as Q1 to Q4 in the Lewis acid (C1) above.

Concrete examples of the Broensted acid (L-H)⁺ in the boron compound (C3) include trialkyl-substituted ammonium, N,N-dialkylanilinium, dialkylammonium, and triarylphosphonium. Examples of (BQ1Q2Q3Q4)⁻ include those given as examples above.

Concrete examples of combinations of the above include triethylammonium tetrakis(pentafluorophenyl)borate, tripropylammonium tetrakis(pentafluorophenyl)borate, tri(n-butyl)ammonium tetrakis(pentafluorophenyl)borate, tri(n-butyl)ammonium tetrakis(3,5-bistrifluoromethylphenyl)borate, N,N-dimethylanilinium tetrakis(pentafluorophenyl)borate, N,N-diethylanilinium tetrakis(pentafluorophenyl)borate, N,N-2,4,6-pentamethylanilinium tetrakis(pentafluorophenyl)borate, N,N-dimethylanilinium tetrakis(3,5-bistrifluoromethylphenyl)borate, diisopropylammonium tetrakis(pentafluorophenyl)borate, dicyclohexylammonium tetrakis(pentafluorophenyl)borate, triphenylphosphonium tetrakis(pentafluorophenyl)borate, tri(methylphenyl)phosphonium tetrakis(pentafluorophenyl)borate, and tri(dimethylphenyl)phosphonium tetrakis(pentafluorophenyl)borate; most preferable among these are tri(n-butyl)ammonium tetrakis(pentafluorophenyl)borate and N,N-dimethylanilinium tetrakis(pentafluorophenyl)borate.

The metallocene catalyst (A) composed of the above-mentioned transition metal compounds may be used in combination with an activating promoter composed of: the following compound (a); compound (b); compound (c); silica or magnesium chloride (d); and an organoaluminum compound (e).
(a): A compound represented by the following general formula [3]:

   Zn(L1)₂ [3]
(b): A compound represented by the following general formula [4] :

   R1OH [4]
(c): A compound represented by the following general formula [5]:

   H₂O [5]
In the general formulae [3] and [4]: L1 represents a hydrocarbon group; L1 may be the same or may be different from each other; and R1 represents a halogenated hydrocarbon group.

Examples of the above-mentioned chromium-based catalyst include known catalysts, such as solid catalysts in which a chromium compound is supported on an inorganic oxide support, or catalysts obtained by combining the solid catalyst with an organometallic compound. Concrete examples thereof include catalysts disclosed in JP-B-44-2996, JP-B-47-1365, JP-B-44-3827, JP-B-44-2337, JP-B-47-19685, JP-B-45-40902, JP-B-49-38986, JP-B-56-18132, JP-B-59-5602, JP-B-59-50242, JP-B-59-5604, JP-B-1-1277, JP-B-1-12778, JP-B-1-12781, JP-A-11-302465, JP-A-9-25312, JP-A-9-25313, and JP-A-9-25314, for example. Other examples include catalysts disclosed in US 6,031,055A, US 5,104,841A, and US 5,137,997A, for example. The disclosures of the above documents are incorporated herein by reference.

Examples of the above-mentioned constrained geometry catalyst include catalysts disclosed in WO2004/013149A1, etc., the disclosure of which is incorporated herein by reference.

Examples of the above-mentioned phenoxyimine catalyst include catalysts disclosed in JP-A-2006-316145, etc.

At the time of molding/processing, the stabilized polymer obtained according to the production process of the present invention can be made into various shapes using various molding methods depending on the usage of the molded article. Examples of molding methods include extrusion, injection molding, rolling, pressing, biaxial drawing, and blow molding. Examples of shaped products include automobile bumpers and other large-scale molded articles, films for agricultural uses, waterproof sheets, pipes, and so forth. Molding conditions such as the temperature and pressure for molding and the configuration of the molding machine can be selected as appropriate depending on, for example, the molecular weight of the resin used and the presence/absence and the types of other additives.

The stabilized polymer obtained according to the production process of the present invention may preferably contain various other additives, depending on the type and/or usage of the polymer, such as: various antioxidants based on, for example, phenol, phosphorus, or sulfur; various UV absorbers based on, for example, benzotriazole, (mono, di, tri)-hydroxyaryl-(di, mono, non)-aryltriazine, or benzophenone; various hindered amine-based light stabilizers of, for example, the N-H-type, N-alkyl-type, or N-alkoxy-type; nucleating agents based on, for example, aromatic carboxylic acid metal salts, cycloalkane carboxylic acid metal salts, bicycloalkane carboxylic acid metal salts, aromatic phosphoric acid ester metal salts, sorbitol, aromatic sulfonic acid metal salts, or amide compounds; flame retardants based on, for example, phosphoric acid esters, phosphates, halogen-containing compounds, or inorganic compounds; and other additives such as flame retardant aids, heavy-metal deactivators, antistatic agents, metal soaps, slip additives, hydrotalcites, fillers, and pigments.

### Examples

The present invention will be described in further detail below according to Examples and Comparative Examples thereof. These Examples, however, are not intended to limit the present invention.

### Examples 1 and Comparative Examples 1: Products Treated in Heptane

Each formulation shown in Table 1 was stirred for 2 hours in 50 ml of heptane, to produce each aluminum phenoxide compound. A portion of each obtained compound was decompressed at 80°C to remove heptane therefrom, and the solid obtained thereby was subjected to ¹H-NMR analysis to determine whether or not there were any residual active hydrogens. Note that the presence/absence of residual active hydrogens was determined considering that the peak at 5.1 to 5.5 ppm belonged to N-H and the peak at 5.0 to 5.1 ppm belonged to O-H. The results are shown in Table 1.

**[Table 1]**

| | | Example 1-1 | Example 1-2 | Example 1-3 | Comp. Example 1-1 | Comp. Example 1-2 |
|---|---|---|---|---|---|---|
| Materials | Compound 1 | 3.00g | 3.00g | 3.00g | 3.00g | 3.00g |
| | Triethyl-aluminum | 0.57g | 0.73g | 1.02g | 0.49g | 0.41g |
| Analyses Results | t/n | 1.4 | 1.8 | 2.5 | 1.2 | 1.0 |
| | N-H | None | None | None | Present | Present |
| | O-H | None | None | None | Present | Present |
| Catalyst Name | | Cat1-1 | Cat1-2 | Cat1-3 | Cat1-4 | Cat1-5 |

### Examples 2 and Comparative Examples 2: Products Treated in Mineral Oil

Each formulation shown in Table 2 was stirred for 2 hours in 50 ml of mineral oil, to produce each aluminum phenoxide compound. A portion of each obtained compound was decompressed at 80°C to remove the mineral oil therefrom, and the presence/absence of residual active hydrogens in the solid obtained thereby was determined in the same way as in Example 1. The results are shown in Table 2.

**[Table 2]**

| | | Example 2-1 | Example 2-2 | Example 2-3 | Comp. Example 2-1 | Comp. Example 2-2 |
|---|---|---|---|---|---|---|
| Materials | Compound 1 | 3.00g | 3.00g | 3.00g | 3.00g | 3.00g |
| | Triethyl-aluminum | 0.57g | 0.73g | 1.02g | 0.49g | 0.41 g |
| Analyses Results | t/n | 1.4 | 1.8 | 2.5 | 1.2 | 1.0 |
| | N-H | None | None | None | Present | Present |
| | O-H | None | None | None | Present | Present |
| Catalyst Name | | Cat2-1 | Cat2-2 | Cat2-3 | Cat2-4 | Cat2-5 |

### Examples 3 and Comparative Examples 3: Products Treated Without Solvent

Each formulation shown in Table 3 was mixed with a mixer for 2 hours in argon atmosphere, to produce each aluminum phenoxide compound. The presence/absence of residual active hydrogens in each obtained compound was determined in the same way as in Example 1. The results are shown in Table 3.

**[Table 3]**

| | | Example 3-1 | Example 3-2 | Example 3-3 | Comp. Example 3-1 | Comp. Example 3-2 |
|---|---|---|---|---|---|---|
| Materials | Compound 1 | 3.00g | 3.00g | 3.00g | 3.00g | 3.00g |
| | Triethyl-aluminum | 0.57g | 0.73g | 1.02g | 0.49g | 0.41g |
| Analyses Results | t/n | 1.4 | 1.8 | 2.5 | 1.2 | 1.0 |
| | N-H | Trace | None | None | Present | Present |
| | O-H | Trace | None | None | Present | Present |
| Catalyst Name | | Cat3-1 | Cat3-2 | Cat3-3 | Cat3-4 | Cat3-5 |

### Comparative Examples 4: Treatment in Toluene

Each formulation shown in Table 4 was stirred for 2 hours in 50 ml of toluene, to produce each aluminum phenoxide compound. A portion of each obtained compound was decompressed at 80°C to remove toluene therefrom, and the presence/absence of residual active hydrogens in the solid obtained thereby was determined in the same way as in Example 1. The results are shown in Table 4.

**[Table 4]**

| | | Comp. Example 4-1 | Comp. Example 4-2 | Comp. Example 4-3 | Comp. Example 4-4 | Comp. Example 4-5 |
|---|---|---|---|---|---|---|
| Materials | Compound 1 | 3.00g | 3.00g | 3.00g | 3.00g | 3.00g |
| | Triethyl-aluminum | 0.57g | 0.73g | 1.02g | 0.49g | 0.41g |
| Analyses Results | t/n | 1.4 | 1.8 | 2.5 | 1.2 | 1.0 |
| | N-H | None | None | None | None | Present |
| | O-H | None | None | None | None | Present |
| Catalyst Name | | Cat4-1 | Cat4-2 | Cat4-3 | Cat4-4 | Cat4-5 |

### Examples 4, Comparative Examples 5, and Reference Example 1: Addition to Polymerization System:

### 1. Preparing Solid Ti Catalyst

A homogeneous solution was prepared by reacting for 2 hours, under heat at 130°C, 4.76 g (50 mmol) of magnesium chloride anhydrous, 25 ml of decane, and 23.4 ml (150 mmol) of 2-ethylhexylalcohol. Then, 1.11 g (7.5 mmol) of phthalic anhydride was added to the solution, and the solution was stirred to react for 1 hour at 130°C, to allow the phthalic anhydride to dissolve into the homogeneous solution. The thus-obtained homogeneous solution was cooled to room temperature, and then the entire amount thereof was added dropwise over 1 hour into 200 ml (1.8 mol) of titanium tetrachloride preserved at -20°C. After completing dropwise addition, the temperature of the mixture was raised to 110°C over 4 hours; when it reached 110°C, 2.68 ml (12.5 mmol) of di-isobutyl phthalate was added thereto, and the mixture was stirred and retained at that temperature for 2 hours. After completing 2 hours of reaction, the mixture was filtered while heating to collect the solid component. The solid component was then re-suspended in 200 ml of titanium tetrachloride and was again heated at 110°C for 2 hours to react. After completing reaction, the mixture was again filtered while heating to collect the solid component, and the solid component was washed thoroughly with decane and hexane at 110°C until no free titanium compound was found in the washing. The solid Ti catalyst component synthesized according to the above production-process was stored as a heptane slurry; a portion thereof was dried to determine the composition of the catalyst. The composition of the thus-obtained solid Ti catalyst component was: 2.6% by weight of titanium; 56.0% by weight of chlorine; 17.0% by weight of magnesium; and 20.9% by weight of isobutyl phthalate.

### 2. Production of Stabilized Polymer

In a 1000-ml nitrogen-displaced autoclave was placed 600 ml of heptane. Triethylaluminum (1.8 mmol) and the respective aluminum phenoxide compound (18 mmol) shown in Table 5 were added thereto, and the mixture was stirred for 5 minutes at 23°C. Dicyclopentyldimethoxysilane (0.18 mmol) and 16 mg of the solid Ti catalyst were added subsequently. The inside of the autoclave was displaced by propylene atmosphere, and a pressure of 1 kgf/cm²G was applied with propylene, to conduct pre-polymerization at 35°C for 10 minutes. The propylene therein was purged; and then, 150 ml (at STP) of hydrogen was introduced into the system in the autoclave, temperature rise was started, and also propylene was introduced therein and a pressure of 6 kgf/cm²G was applied, to conduct polymerization at 70°C for 1 hour. Then cooling was started (down to 40°C), and also the propylene in the system was purged and displaced by nitrogen; then 5 ml of ethanol was added, to deactivate the catalyst and also completely stop polymerization. The obtained heptane slurry containing polypropylene powder was decompressed at 50°C to remove the solvent. Then, the polymer was dried for 5 hours at 40°C in a vacuum, to afford polypropylene powder. The yield and the weight-average molecular weight of each polypropylene obtained are shown in Table 5.

For each polypropylene obtained, the residual solvent amount in each polypropylene was measured according to the following method. The results are shown in Table 5.

### Method for Measuring Residual Solvent Amount:

To 100 g of o-dichlorobenzene was dissolved 1 g of the respective polypropylene obtained, and the residual amount of heptane, mineral oil, or toluene in the polypropylene was measured using a gas chromatograph.

**[Table 5]**

| | Example 4-1 | Example 4-2 | Example 4-3 | Example 4-4 | Example 4-5 | Example 4-6 | Comp. Example 5-1 | Comp. Example 5-2 | Comp. Example 5-3 | Comp. Example 5-4 | Ref. Example 1-1 |
|---|---|---|---|---|---|---|---|---|---|---|---|
| Aluminum Phenoxide Compound | Cat1-1 | Cat1-2 | Cat2-1 | Cat2-2 | Cat3-1 | Cat3-2 | Cat1-4 | Cat2-4 | Cat3-4 | Cat4-1 | None |
| Yield (g) | 131 | 129 | 133 | 132 | 131 | 130 | 113 | 106 | 108 | 115 | 131 |
| Weight-average Molecular Weight | 396,000 | 392,000 | 394,000 | 397,000 | 398,000 | 393,000 | 388,000 | 384,000 | 386,000 | 390,000 | 404,000 |
| Residual Solvent Amount (ppm) | 30 | 35 | 127 | 120 | 33 | 31 | 35 | 130 | 33 | 152 | 30 |

The results of Table 5 show that the polypropylene yield was low in cases where an aluminum phenoxide compound having an excess aluminum-compound ratio of 20 equivalent percent (t/n = 1.2) was added at the time of polymerization of polypropylene, as in Comparative Examples 5-1 to 5-3.
In contrast, in cases where an aluminum phenoxide compound of the present invention having an excess aluminum-compound ratio of 40 equivalent percent or more (t/n = 1.4 or 1.8) was added as in Examples 4-1 to 4-6, the polypropylene yield was comparable to that of Reference Example 1-1 which contained no aluminum phenoxide compound.

Further, Comparative Example 5-4 reveals that, in cases where an aluminum phenoxide compound produced using toluene, an aromatic solvent, was added at the time of polymerization of polypropylene, both the yield and molecular weight of the obtained polypropylene decreased while the residual solvent amount in polypropylene increased about five-fold, compared to Example 4-1 in which an aluminum phenoxide compound of the present invention produced using heptane, an aliphatic solvent, was added.
It is thus concluded that aluminum phenoxide compounds produced using aromatic solvents, such as toluene, affect polymerization itself and also impair the quality of polymerized products from the standpoint of sanitary conditions.

## Claims

1. An aluminum phenoxide compound produced without using an aromatic solvent and represented by general formula (I) below: 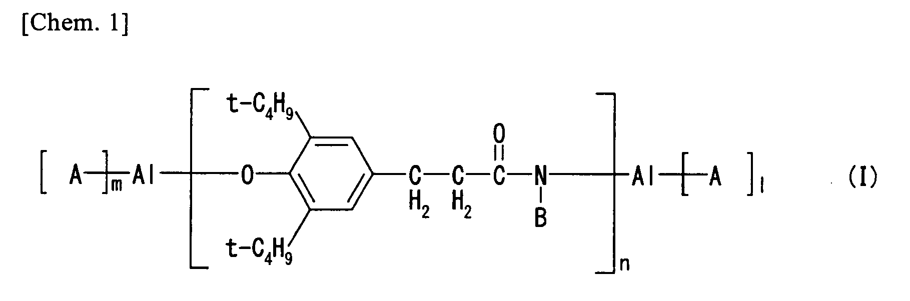 wherein, A represents an alkyl group having 2 to 6 carbon atoms, a halogen atom, or methylaminoxane; B represents a hexadecyl group, a heptadecyl group, or an octadecyl group; 1, m, and n represent numbers that satisfy expressions m≥1, 1≥1, m+n=3, and 1+n=3; when m or 1 exceeds 1, then A may be different from each other; and when the number of moles of aluminum atoms is expressed as "t", then t/n≥1.3.

2. The aluminum phenoxide compound according to claim 1, produced by using hexane and/or heptane as a solvent.

3. The aluminum phenoxide compound according to claim 1, produced without using a solvent.

4. The aluminum phenoxide compound according to any one of claims 1 to 3, wherein A in the general formula (I) is an ethyl group.

5. A process for producing a stabilized polymer, comprising:
adding the aluminum phenoxide compound according to any one of claims 1 to 4 to a catalyst system or a polymerization system before or during polymerization.

6. The process for producing a stabilized polymer according to claim 5, wherein the catalyst for polymerization is a transition metal catalyst.

7. The process for producing a stabilized polymer according to claim 5, wherein the catalyst for polymerization is a Ziegler-Natta catalyst.

8. The process for producing a stabilized polymer according to claim 5, wherein the catalyst for polymerization is a Ziegler catalyst.

9. The process for producing a stabilized polymer according to claim 5, wherein the catalyst for polymerization is a metallocene catalyst.

10. The process for producing a stabilized polymer according to claim 5, wherein the catalyst for polymerization is a chromium-based catalyst.

11. The process for producing a stabilized polymer according to claim 5, wherein the catalyst for polymerization is a constrained geometry catalyst.

12. The process for producing a stabilized polymer according to claim 5, wherein the catalyst for polymerization is a phenoxyimine catalyst.

13. The process for producing a stabilized polymer according to any one of claims 5 to 12, wherein the polymerization is by any one of slurry polymerization, bulk polymerization, gas-phase polymerization, supercritical polymerization, solution polymerization, or a combination thereof.

14. The process for producing a stabilized polymer according to any one of claims 5 to 13, wherein the polymer produced is a propylene homopolymer, a copolymer of propylene and ethylene and/or an α-olefin, a polyethylene homopolymer, a copolymer of ethylene and an α-olefin, a polybutene homopolymer, a copolymer of butene and ethylene and/or an α-olefin, poly 4-methyl-1-pentene, a cycloolefin polymer, or syndiotactic polystyrene.

15. A propylene homopolymer or a copolymer of propylene and ethylene and/or an α-olefin produced according to the process for producing a stabilized polymer according to any one of claims 5 to 13.
